# EUROPÄISCHE PATENTSCHRIFT

(11) **EP 4 248 418 B1**
(45) Veröffentlichungstag und Bekanntmachung des Hinweises auf die Patenterteilung: **02.09.2026**
(21) Anmeldenummer: 21815163.7
(22) Anmeldetag: 16.11.2021
(51) Int. Cl.: G06V 10/774, G06V 10/82, G06V 10/80, G06V 20/58

(54) **VERFAHREN UND SYSTEM ZUR ANNOTATION VON SENSORDATEN**
METHOD AND SYSTEM FOR ANNOTATING SENSOR DATA
PROCÉDÉ ET SYSTÈME POUR ANNOTER DES DONNÉES DE CAPTEUR

(30) Priorität: 17.11.2020 DE 102020130335
(43) Veröffentlichungstag der Anmeldung: 27.09.2023
(73) Patentinhaber: dSPACE SE & Co. KG, 33102 Paderborn (DE)
(72) Erfinder: RÖDLER, Daniel, 76227 Karlsruhe (DE); THOMAS, Phillip, 76133 Karlsruhe (DE); ROMANSKI, Simon, 76227 Karlsruhe (DE); URUMOV, Georgi, 12049 Berlin (DE); BIESTER, Tobias, 76227 Karlsruhe (DE); JACOB, Ruben, 76227 Karlsruhe (DE); NEUBERT, Boris, 76227 Karlsruhe (DE)
(86) Internationale Anmeldenummer: PCT/EP2021/081845
(87) Internationale Veröffentlichungsnummer: WO 2022/106414

(56) Entgegenhaltungen:
- GUO HAN ET AL: "A Scalable Data Augmentation and Training Pipeline for Logo Detection", 2019 IEEE INTERNATIONAL SYMPOSIUM ON MULTIMEDIA (ISM), IEEE, 9 December 2019 (2019-12-09), pages 48 - 487, XP033689214, [retrieved on 20200113], DOI: 10.1109/ISM46123.2019.00016
- REZA MD ALIMOOR ET AL: "Automatic Dense Annotation for Monocular 3D Scene Understanding", IEEE ACCESS, IEEE, USA, vol. 8, 1 April 2020 (2020-04-01), pages 68852 - 68865, XP011785043, DOI: 10.1109/ACCESS.2020.2984745
- KAIMING HE ET AL: "Mask R-CNN", 24 January 2018 (2018-01-24), XP055621354, Retrieved from the Internet <URL:https://arxiv.org/pdf/1703.06870.pdf> [retrieved on 20190911], DOI: 10.1109/TPAMI.2018.2844175
- LI E ET AL: "SUSTech POINTS: A Portable 3D Point Cloud Interactive Annotation Platform System", 2020 IEEE INTELLIGENT VEHICLES SYMPOSIUM (IV), IEEE, 19 October 2020 (2020-10-19), pages 1108 - 1115, XP033873398, DOI: 10.1109/IV47402.2020.9304562
- SHIVANG AGARWAL ET AL: "Recent Advances in Object Detection in the Age of Deep Convolutional Neural Networks", ARXIV.ORG, CORNELL UNIVERSITY LIBRARY, 201 OLIN LIBRARY CORNELL UNIVERSITY ITHACA, NY 14853, 10 September 2018 (2018-09-10), XP081465554
- JIE LI ET AL: "A Density-Aware PointRCNN for 3D Objection Detection in Point Clouds", ARXIV.ORG, CORNELL UNIVERSITY LIBRARY, 201 OLIN LIBRARY CORNELL UNIVERSITY ITHACA, NY 14853, 11 September 2020 (2020-09-11), XP081760427
- KOMARICHEV ARTEM ET AL: "A-CNN: Annularly Convolutional Neural Networks on Point Clouds", 2019 IEEE/CVF CONFERENCE ON COMPUTER VISION AND PATTERN RECOGNITION (CVPR), IEEE, 15 June 2019 (2019-06-15), pages 7413 - 7422, XP033686912, DOI: 10.1109/CVPR.2019.00760

## Beschreibung

Die Erfindung betrifft ein computerimplementiertes Verfahren zur automatischen Annotation von Sensordaten eines Fahrszenarios, einen computerlesbaren Datenträger und ein Computersystem.

Autonomes Fahren verspricht ein noch nie dagewesenes Maß an Komfort und Sicherheit im alltäglichen Verkehr. Trotz enormer Investitionen diverser Unternehmen sind die bestehenden Ansätze aber nur unter eingeschränkten Bedingungen anwendbar bzw. ermöglichen nur eine Teilmenge wirklich autonomen Verhaltens. Ein Grund dafür liegt in dem Fehlen einer ausreichenden Anzahl und Vielfalt von Fahrszenarien. Für das Training autonomer Fahrfunktionen sind annotierte Sensordaten aus Fahrszenarien erforderlich. Ein gängiger Ansatz für die Annotation von Daten, auch Datenanreicherung genannt, verwendet eine große Anzahl von Mitarbeitern, um jedes Bild manuell zu annotieren. Infolgedessen sind herkömmliche Verfahren zur Datenanreicherung extrem zeitaufwändig, fehleranfällig und daher extrem teuer.

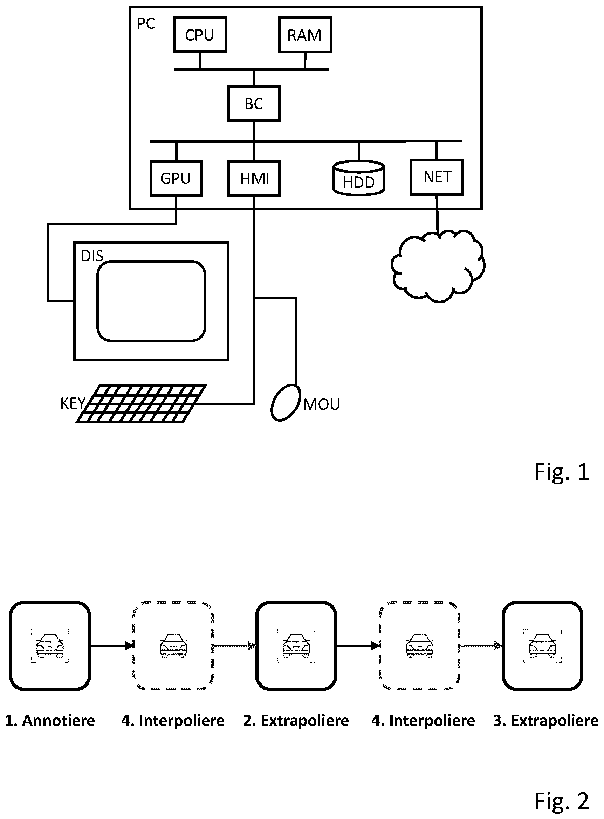

Ein halbautomatischer Ansatz, der die Annotation von Keyframes und die Interpolation/Extrapolation umfasst, bietet eine gewisse - begrenzte - Verbesserung. Dieser ist schematisch in Fig. 2 dargestellt und umfasst die Auswahl einer Anzahl von Bildern als Keyframes, die manuell mit Hilfe von Propagation/Extrapolation annotiert werden. Nach der manuellen Bearbeitung der Keyframes werden die Annotationen zu den dazwischen liegenden Frames durch Interpolation generiert. Somit erfolgt die Erkennung von Objekten auf Keyframes durch Menschen, welche weiterhin zusammengehörige Objekte unter Hilfe einer Extrapolation verknüpfen. Der Interpolationsprozess verwendet dann diese Informationen - Objekterkennung und -verknüpfung -, um Annotationen für dieselben Objekte auf allen Frames zwischen den Keyframes zu generieren. Theoretisch kann die Effizienz dieses Mechanismus erhöht werden, indem der Abstand zwischen den Keyframes vergrößert wird, da dann mehr Annotationen automatisch erstellt werden. Allerdings ist ein größerer Abstand zwischen den Keyframes mit einem drastischen Anstieg der erforderlichen manuellen Korrekturen verbunden. Objekte, die z. B. nur kurz auf Nicht-Keyframes zu sehen sind, müssen durch manuelle Eingriffe abgedeckt werden. Hier stößt dieser Automatisierungsansatz recht schnell an seine Grenzen. Aus dem Dokument "Automatic Dense Annotation for Monocular 3D Scene Understanding" von MD Alimoor Reza, veröffentlicht in IEEE Access am 1. April 2020, sind ein Verfahren zur semantischen Segmentierung von Innenraumszenen und ein Verfahren zur Tiefenschätzung, bei dem von Menschen erstellte Annotationen in Keyframes automatisch auf einen ganzen Videoclip propagiert werden, bekannt.

Das Dokument "A Scalable Data Augmentation and Training Pipeline for Logo Detection" von Han Guo et al., 2019 IEEE International Symposium on Multimedia (ISM) offenbart eine skalierbare Datenaugmentierungs- und Trainings-Pipeline für die Erkennung von Logos in Bildern, welche Bilder nutzt, die eine Web-Suchmaschine auf die Frage nach einer bestimmten Firma ausgibt. Falsch positive Ergebnisse, die das gesuchte Logo nicht enthalten, werden manuell korrigiert.

Mit herkömmlichen Annotierungsstrategien können daher nur kleine bis mittelgroße Datenanreicherungsprojekte in Angriff genommen werden, während andere übergeordnete Funktionen wie die Validierung autonomer Fahrfunktionen, eine Selektion von Daten oder die Erstellung von Szenariobibliotheken aufgrund des enormen manuellen Aufwands und der damit verbundenen Kosten unerreichbar sind.

Aufgabe der vorliegenden Erfindung ist es daher, verbesserte Methoden für die Annotation von Fahrszenario-Sensordaten bereitzustellen; besonders wünschenswert wäre eine automatisierte Annotationsmethode mit minimalem Bedarf an menschlichen Eingriffen.

Diese Aufgabe wird durch ein Verfahren zur Annotation von Fahrszenario-Sensordaten nach Anspruch 1, einen computerlesbaren Datenträger nach Anspruch 11 und ein Computersystem nach Anspruch 12 gelöst. Vorteilhafte Weiterbildungen sind Gegenstand der abhängigen Unteransprüche.

Es wird also ein computerimplementiertes Verfahren zur Annotation von Fahrszenario-Sensordaten bereitgestellt, das folgende Schritte umfasst:
- Empfangen von Sensor-Rohdaten, wobei die Sensor-Rohdaten eine Mehrzahl von aufeinanderfolgenden LIDAR-Punktwolken und/oder eine Mehrzahl von aufeinanderfolgenden Kamerabildern umfassen,
- Erkennen von Objekten in jedem Bild der Kameradaten und/oder jeder Punktwolke unter Verwendung eines oder mehrerer neuronaler Netze, wobei einem erkannten Objekt vorzugsweise eine Objektklasse, eine Objektposition, eine Objektgröße und/oder Objektausdehnungen zugeordnet werden, insbesondere Koordinaten einer das Objekt umfassenden Bounding Box,
- Korrelieren von Objekten innerhalb aufeinanderfolgender Bilder und/oder Punktwolken,
- Entfernen von falsch positiven Ergebnissen auf der Grundlage von Plausibilitätskriterien und
- Exportieren der annotierten Sensordaten des Fahrszenarios.

Vorteilhafterweise können die neuronalen Netze zur Objekterkennung auf einen hohen Recall optimiert werden, also auf das Erkennen eines möglichst hohen Prozentsatzes der tatsächlich vorhandenen Objekte, weil das spätere Entfernen falsch positiver Ergebnisse auf der Grundlage von Plausibilitätskriterien Fehlerkennungen ohne manuelle Eingriffe wirksam minimiert.

Die Erfindung basiert auf der Überlegung, dass semantische Informationen, die aus der zeitlichen Korrelation von Objekten in den Einzelbildern einer Aufnahme abgeleitet werden, mit Hilfe einer Reihe von Schritten/Techniken effektiv genutzt werden können. Hierbei erfolgt zunächst eine Erkennung von Objekten, die zweckmäßigerweise auch über eine Reihe von Bildern getrackt bzw. miteinander korreliert werden. Die verwendeten Techniken umfassen weiterhin ein Entfernen falsch positiver Ergebnisse, bei denen ein Objekt irrtümlich erkannt wurde, ein Auffüllen von Lücken, eine Optimierung von Objektgröße und -position per Regression sowie ein Glätten von Trajektorien. Einige Schritte/Techniken wie eine Regression von Objektgröße und/oder - position können optional sein.

Die Erfindung führt einen Paradigmenwechsel ein, bei dem die Annotation im Vorfeld automatisch erfolgt und nur eine geführte Qualitätskontrolle erforderlich ist, um das Projekt erfolgreich abzuschließen. Durch das automatische Anwenden eines automatischen Annotationsverfahren auf Rohdaten können qualitativ hochwertige Annotationen
- viel schneller (bessere Projektdurchlaufzeiten)
- zu geringeren Kosten (weniger manueller Aufwand erforderlich)
- bei gleichbleibender Qualität erstellt werden. Im Gegensatz hierzu basiert die Annotation nach dem Stand der Technik auf Arbeitskräften aus Niedriglohnländern, in denen eine große Anzahl von Personen mit wenig Erfahrung an der Erstellung von Annotationen arbeiten. Dies führt in der Regel zu erheblichen Qualitätsproblemen und umfangreichen Nachbearbeitungszyklen, die das Projekt weiter verlangsamen und die Kosten erhöhen.

Mit einem erfindungsgemäßen Verfahren wird ein neuer Grad an Qualität, Konsistenz und Automatisierung erreicht, der wesentlich höhere Durchsatzraten als bei bisherigen Annotationsverfahren. Nur noch die Qualitätssicherung muss durch menschliche Arbeitskraft abgedeckt werden, was zu einer erheblichen Kostenreduzierung führt.

Dadurch wird es möglich, Projekte in Größenordnungen durchzuführen, die vorher aufgrund der Kosten manueller Annotation nicht realisierbar waren, aber auch übergeordnete Funktionen wie die Datenselektion viel sinnvoller durchzuführen, da die Annotation nur noch eine Frage der Rechenzeit und nicht mehr des manuellen Aufwands ist. So können alle Rohdaten im Vorfeld annotiert werden, um dann auf Basis der Annotationen interessante Szenen auszuwählen. Der manuelle Aufwand zur Qualitätssicherung kann in einem nachfolgenden Schritt nur auf interessante Daten angewendet werden.

In einer bevorzugten Ausführungsform der Erfindung umfassen die Sensor-Rohdaten LIDAR-Punktwolken, wobei die LIDAR-Punktwolke in mindestens zwei Regionen unterteilt wird, wobei in der ersten Region ein neuronales Netz einer ersten Architektur verwendet wird, und in der zweiten Region ein neuronales Netz einer zweiten Architektur verwendet wird, wobei die erste Architektur sich von der zweiten Architektur unterscheidet. Eine automatische Auswahl ermöglicht eine optimale Anpassung des verwendeten neuronalen Netzes an die Anforderungen.

In einer besonders bevorzugten Ausführungsform der Erfindung umfasst die erste Region eine nähere Umgebung eines Messfahrzeugs, welches die Sensor-Rohdaten aufgenommen hat, während die zweite Region einen Mindestabstand zum Messfahrzeug aufweist, wobei vorzugsweise in der ersten Region eine Center-Point-basierte Architektur und in der zweiten Region ein PointRCNN-basierte Architektur für das neuronale Netz zur Objekterkennung verwendet wird. Bei weiter entfernten Objekten, die häufig nur wenige Messpunkte aufweisen, ermöglicht ein neuronales Netz mit PointRCNN-Architektur die Erzeugung von Bounding Boxes mit passenden Dimensionen. Im Nahbereich ermöglicht ein neuronales Netz in Center-Point-Architektur eine bessere Unterscheidung zwischen verschiedenen Objektklassen. Somit wird der manuelle Korrekturaufwand minimiert.

Erfindungsgemäß umfasst das Verfahren zusätzlich ein Entfernen von Duplikaten vor dem Korrelieren von Objekten, wobei das Entfernen von Duplikaten vorzugsweise auf einem Überlapp-Kriterium und/oder einem Konfidenzniveau eines neuronalen Netzes basiert. Wenn zwei Bounding Boxes einen sehr großen Überlapp aufweisen, was durch den Vergleich mit einem Schwellwert wie 0.98 ermittelt werden kann, beziehen sie sich auf das selbe Objekt. Zusätzlich kann auch vorgesehen sein, dass nur Objekte mit einem geringen Konfidenzniveau verworfen werden. Das Konfidenzniveau kann mit einem speziell trainierten Netz ermittelt werden oder durch eine Angabe des für die Objekterkennung verwendeten Netzes approximiert werden.

In einer besonders bevorzugten Ausführungsform der Erfindung erfolgt das Entfernen von Duplikaten erkannter Objekte innerhalb eines Bildes und/oder einer Punktwolke, wobei für zwei überlappende Objekte, ein erstes Objekt, das mit einem ersten Konfidenzniveau erkannt wurde, und ein zweites Objekt, das mit einem zweiten Konfidenzniveau erkannt wurde, wobei das erste Konfidenzniveau größer ist als das zweite Konfidenzniveau, überprüft wird, ob der Überlapp, insbesondere die Intersection-over-Union, einen vorgegebenen Schwellenwert überschreitet, und wobei in diesem Fall das zweite Objekt als Duplikat verworfen wird. Prinzipiell könnte auch eine willkürliche Auswahl des zu verwerfenden Duplikats erfolgen.

In einer bevorzugten Ausführungsform der Erfindung umfasst das Korrelieren von Objekten ein Verknüpfen von Objekten in aufeinanderfolgenden Frames, also Bildern und/oder Punktwolken, wobei ein Objekt in einem ersten Frame mit einem Objekt in einem zweiten Frame korreliert wird, wenn die Objekte zu derselben Objektklasse gehören und der Überlapp, insbesondere die Intersection-over-Union, einen vorgegebenen Schwellenwert überschreitet. Da LIDAR-Sensoren, besonders aber auch Kameras eine Vielzahl von Messungen pro Sekunden durchführen, ändert sich die Umgebung eines Fahrzeugs in der Regel graduell. Durch die Betrachtung der zeitlichen Korrelation zwischen aufeinanderfolgenden Frames können weitere Informationen gewonnen werden und/oder die Plausibilität einer Objekterkennung überprüft werden.

In einer besonders bevorzugten Ausführungsform der Erfindung umfasst das Korrelieren von Objekten ein Vorhersagen einer Position eines Objekts auf einem nachfolgenden Bild und/oder einer nachfolgenden Punktwolke mittels einer Gaußschen Prozessreduktion oder eines Kalman Filters und/oder es erfolgt ein Tracken von Objekten in aufeinanderfolgenden Bildern mittels eines Factor Graphs, also eines bipartiten Graphen zur Faktorisierung der Wahrscheinlichkeitsverteilung. Die genannten Verfahren sind für ein Ermitteln der Korrelation besonders zweckmäßig.

Besonders bevorzugt erfolgt nach dem Korrelieren von Objekten ein Korrigieren von verpassten Objekten, wobei mehr als zwei aufeinanderfolgende Frames betrachtet werden, wobei wenn ein Objekt in einem ersten Frame mit einem Objekt in einem dritten Frame korreliert wurde, aber kein Objekt im dazwischenliegenden Frame erkannt wurde, dann das Objekt im zweiten Frame eingefügt wird. Alternativ oder ergänzend kann es auch vorgesehen sein, dass eine größere Anzahl aufeinanderfolgender Frames betrachtet wird, wodurch auch solche Lücken geschlossen werden können, die mehrere Frames umfassen. Verpasste Objekte können insbesondere aufgrund von Verdeckungen oder Abschneidungen auftreten. Als ein Zusatzkriterium kann es vorgesehen sein, dass Lücken aus mehr als einem Frame nur dann geschlossen werden, wenn an der betreffenden Stelle oder in einer Umgebung davon ein weiteres Objekt erkannt wurde. Insbesondere könnte anhand einer Betrachtung der Bounding Box des weiteren Objekts ermittelt werden, ob dieses für eine Verdeckung hinreichend groß ist.

Gemäß der Erfindung basieren die Plausibilitätskriterien für das Entfernen von falsch positiven Ergebnissen auf der Höhe über dem Boden, der Existenzdauer und/oder dem Konfidenzniveau eines neuronalen Netzes. Ein Objekt kann als unplausibel verworfen werden, wenn zu mehr als einem vorgegebenen Bruchteil unter der Erdoberfläche erkannt wurde. Weiterhin kann ein Objekt als unplausibel verworfen werden, wenn es um mehr als einen vorgegebenen Schwellwert oberhalb des Bodens erkannt wurde. Die Plausibilitätskriterien und/oder Schwellwerte können von der Objektklasse abhängig gewählt werden. Ein Objekt kann ferner als unplausibel verworfen werden, wenn es eine sehr kurze Existenzdauer hat, also insbesondere nur in einem Frame erkannt wurde, aber in den benachbarten Frames nicht. Bei der Betrachtung der Existenzdauer kann zweckmäßigerweise eine mögliche Verdeckung berücksichtigt werden. Alternativ oder ergänzend kann das Verwerfen eines Objekts als unplausibel von dem Konfidenzniveau eines neuronalen Netzes abhängig gemacht werden, wobei insbesondere nur Objekte mit einem geringen Konfidenzniveau verworfen werden können. Das Konfidenzniveau kann mit einem speziell trainierten Netz ermittelt werden oder durch eine Angabe des für die Objekterkennung verwendeten Netzes approximiert werden.

In einer bevorzugten Ausführungsform umfasst das Verfahren ferner ein Optimieren der Objektgröße und/oder Objektposition in jedem Bild der Kameradaten und/oder jeder Punktwolke durch Regression. Da eine Objekterkennung bereits erfolgt ist, kann die Auswertung auf eine besonders genaue Ermittlung der Bounding Boxen optimiert sein.

In einer bevorzugten Ausführungsform umfasst das Verfahren ferner eine Vereinheitlichung der Größe von korrelierten Objekten in aufeinanderfolgenden Bildern und/oder Punktwolken, wobei vorzugsweise die Vereinheitlichung der Größe von korrelierten Objekten in Abhängigkeit von der Objektklasse vorgenommen oder unterlassen wird. Beispielsweise muss bei Fahrzeugen wie PKWs oder Sattelzügen eine gleichbleibende Größe vorliegen. Indem die Größe vereinheitlicht wird, wirken die Objekte natürlicher.

Es ist vorteilhaft, wenn die Sensor-Rohdaten LIDAR-Punktwolken und simultan aufgenommene Kameradaten umfassen, wobei eine Korrelation von Objekten unter Berücksichtigung der relativen räumliche Ausrichtung von LIDAR-Sensor und Kamera erfolgt. Somit können die räumlichen Informationen des LIDAR-Sensors und die höhere Auflösung der Kamera optimal genutzt werden.

In einer bevorzugten Ausführungsform wird auf ein erkanntes Objekt mindestens ein neuronales Netzwerk zur Erkennung von Attributen angewendet. Vorzugsweise wird mindestens ein Attribut, insbesondere der Blinker-Status eines Fahrzeugs, anhand eines Kamerabilds ermittelt und einem Objekt in der LIDAR-Punktwolke zugeordnet. Das mindestens eine Attribut und das oder die für die Erkennung verwendete neuronale Netz können von der Objektklasse abhängig gewählt werden. Wenn sowohl Punktwolken als auch Kamerabilder vorliegen, kann zweckmäßigerweise eine Sensorfusion erfolgen, wobei für die Attributerkennung das Kamerabild herangezogen wird und das Attribut dem fusionierten Objekt zugeordnet wird.

Die Erfindung betrifft weiterhin einen computerlesbaren Datenträger, der Anweisungen enthält, die, wenn sie von einem Prozessor eines Computersystems ausgeführt werden, das Computersystem veranlassen, ein erfindungsgemäßes Verfahren auszuführen.

Ferner betrifft die Erfindung ein Computersystem, umfassend einen Prozessor, eine Mensch-Maschine-Schnittstelle und einen nichtflüchtigen Speicher, wobei der nichtflüchtige Speicher Befehle enthält, die, wenn sie von dem Prozessor ausgeführt werden, das Computersystem veranlassen, ein erfindungsgemäßes Verfahren auszuführen.

Bei dem Prozessor kann es sich um einen Allzweck-Mikroprozessor handeln, der üblicherweise als zentrale Verarbeitungseinheit eines Arbeitsplatzrechners verwendet wird, oder er kann ein oder mehrere Verarbeitungselemente umfassen, die zur Durchführung spezifischer Berechnungen geeignet sind, wie beispielsweise eine Grafikverarbeitungseinheit. In alternativen Ausführungsformen der Erfindung kann der Prozessor durch einen programmierbaren Logikbaustein, z. B. ein feldprogrammierbares Gate-Array, ersetzt oder ergänzt werden, der so konfiguriert ist, dass er eine bestimmte Anzahl von Operationen ausführen kann, und/oder einen IP-Core-Mikroprozessor umfasst.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: ein beispielhaftes Diagramm eines Computersystems,
- Figur 2: eine schematische Darstellung einer Anzahl von Bildern, die halbautomatisch mit Hilfe von Keyframes annotiert werden,
- Figur 3: einen schematischen Ablaufplan einer Ausführungsform des erfindungsgemäßen Verfahrens zur Annotation von Fahrszenario-Sensordaten,
- Figur 4: eine schematische Darstellung einer Anzahl von Bildern, an denen eine automatische Objekterkennung durchgeführt wurde,
- Figur 5: eine schematische Darstellung einer Anzahl von Bildern, bei denen eine zeitliche Korrelation ermittelt wurde,
- Figur 6: eine schematische Darstellung einer Anzahl aufeinanderfolgender Bilder mit einer Trajektorie, an der eine weitergehende Auswertung erfolgen kann,
- Figur 7: eine Ausführungsform eines Automatisierungssystems zur Durchführung eines erfindungsgemäßen Verfahrens,
- Figur 8: eine Ausführungsform eines Verfahrens zum automatisierten Trainieren von Attributdetektoren, und
- Figur 9: eine Ausführungsform einer Benutzeroberfläche zur Qualitätskontrolle.

Fig. 1 zeigt eine beispielhafte Ausführungsform eines Computersystems.

Die gezeigte Ausführungsform umfasst einen Host-Computer PC mit einem Monitor DIS und Eingabegeräten wie einer Tastatur KEY und einer Maus MOU.

Der Host-Computer PC umfasst mindestens eine Prozessor CPU mit einem oder mehreren Kernen, einen Arbeitsspeicher RAM mit wahlfreiem Zugriff und eine Anzahl von Geräten, die an einen lokalen Bus (wie PCI Express) angeschlossen sind, der Daten über einen Buscontroller BC mit der CPU austauscht. Die Geräte umfassen z.B. eine Grafikprozessor GPU zum Ansteuern des Displays, einen Controller USB zum Anschließen von Peripheriegeräten, einen nichtflüchtigen Speicher wie eine Festplatte oder eine Solid-State-Disk und eine Netzwerkschnittstelle NC. Der nichtflüchtige Speicher kann Anweisungen umfassen, die, wenn sie von einem oder mehreren Kernen des Prozessors CPU ausgeführt werden, das Computersystem veranlassen, ein erfindungsgemäßes Verfahren auszuführen.

In einer Ausführungsform der Erfindung, die durch eine stilisierte Wolke in der Figur angedeutet wird, kann der Host-Computer einen oder mehrere Server umfassen, die ein oder mehrere Rechenelemente wie Prozessoren oder FPGAs umfassen, wobei die Server über ein Netzwerk mit einem Client verbunden sind, der eine Anzeigevorrichtung und Eingabegerät umfasst. Somit kann das Verfahren zur Erzeugung von Simulationsszenarien teilweise oder vollständig auf einem entfernten Server ausgeführt werden, beispielsweise in einem Cloud-Computing-Setup. Alternativ zu einem PC-Client kann eine grafische Benutzerschnittstelle der Simulationsumgebung auf einem tragbaren Computergerät angezeigt werden, insbesondere einem Tablet oder einem Smartphone.

In Fig. 2 ist schematisch eine Anzahl von aufeinanderfolgenden Bildern dargestellt, die halbautomatisch mit Hilfe von Keyframes annotiert werden.

Bei dem ersten, dritten und fünften Bild handelt es sich jeweils um einen Keyframe (angedeutet durch einen fetten Rahmen), während das zweite und vierte Bild als dazwischenliegende Bilder behandelt werden (angedeutet durch einen gestrichelten Rahmen). In einem ersten Schritt (1. Annotiere) wird der erste Keyframe manuell mit den gewünschten Annotationen versehen, indem beispielsweise eine Bounding Box um erkannte Objekte gezogen wird, und weitere Attribute wie z.B. Objektklasse hinzugefügt werden. In einem zweiten Schritt (2. Extrapoliere) wird eine voraussichtliche Position der im ersten Keyframe annotierten Objekte für den zweiten Keyframe ermittelt und manuell korrigiert. Eventuell neu hinzugekommene Objekte werden vollständig manuell annotiert. In einem dritten Schritt (3. Extrapoliere) wird eine voraussichtliche Position der bereits annotierten Objekte für den dritten Keyframe ermittelt und manuell korrigiert. Sobald alle Keyframes annotiert sind, werden die Objektpositionen auf den dazwischenliegenden Frames in einem vierten Schritt (4. Interpoliere) durch Interpolation ermittelt und die Attribute übertragen.

Einer Erhöhung der Automatisierungsrate durch Vergrößern des Abstands zwischen Keyframes ist dadurch begrenzt, dass der manuelle Korrekturaufwand sehr bald ansteigt, weil die Extrapolation und ggfs. auch die Interpolation der Objektpositionen nicht mehr hinreichend genau ist.

Durch die Einführung der zeitlichen Korrelation, bei der Annotationen desselben Objekts über die Zeitachse automatisch miteinander korreliert werden, und die Kombination mit der Objekterkennung über neuronale Netze können die Grenzen der heutigen Halbautomatisierung wirksam überwunden werden. Die zeitliche Korrelation basiert auf der Tatsache, dass sich aufeinanderfolgende Bilder im Laufe der Zeit nur allmählich verändern. Logische Verknüpfungen zwischen Objekten können automatisch erkannt und genutzt werden, um semantische Informationen auf höherer Ebene zu extrahieren, wodurch ein auf Objekterkennung basierender Ansatz ermöglicht wird, der letztendlich zu einem viel höheren Automatisierungsgrad führt.

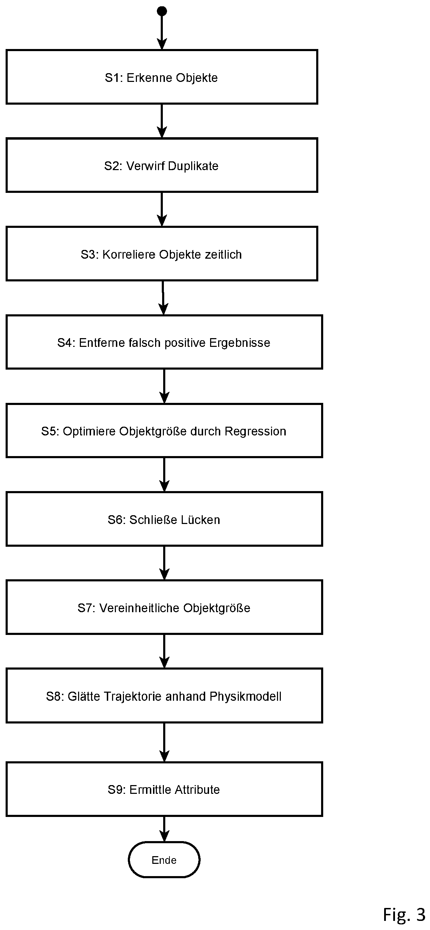

Figur 3 zeigt einen schematischen Ablaufplan einer Ausführungsform des erfindungsgemäßen Verfahrens zur Annotation von Fahrszenario-Sensordaten.

In einem ersten Schritt S1 (Erkenne Objekte) werden neuronale Netze zur Objektdetektion eingesetzt, um vorzugsweise so viele Objekte wie möglich in jedem Bild bzw. jeder Punktwolke zu erkennen.

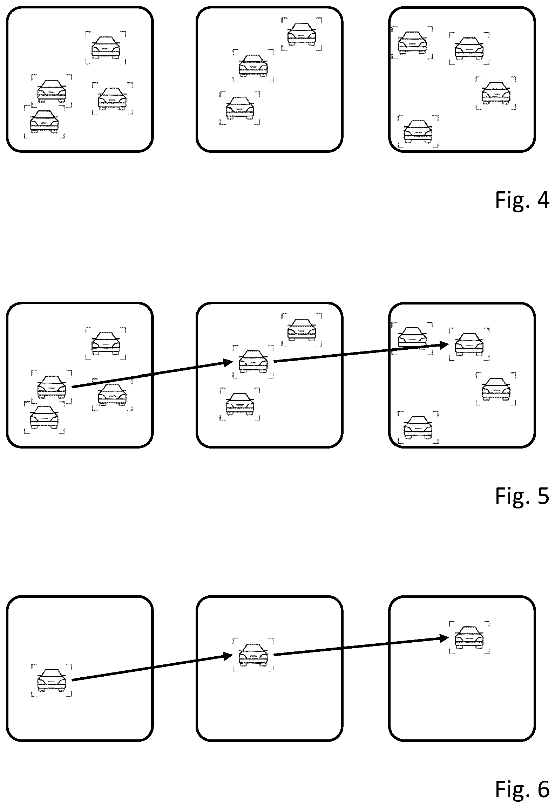

Figur 4 stellt schematisch eine Reihe von Bildern dar, in denen neuronale Netze im ersten Durchgang eine Reihe von Objekten erkannt haben. Beispielsweise kann es sich, wie angedeutet um Kraftfahrzeuge handeln, prinzipiell werden verschiedene Objekttypen bzw. -klassen, neben Fahrzeugen auch Fußgänger, Tiere und Hindernisse oder jedes andere interessante statische oder dynamische Objekt in jedem Bild eines Clips bzw. einer aufeinanderfolgenden Reihe von Bildern und/oder LIDAR-Punktwolken erkannt.

In einer bevorzugten Ausführungsform werden für die Erkennung von Objekten je nach Objektklasse und/oder Bereich der Sensordaten verschiede Architekturen von neuronalen Netzen eingesetzt. Insbesondere können für die Erkennung von Objekten in einer LIDAR-Punktwolke verschiedene Architekturen von neuronalen Netzen in verschiedenen Bereichen verwendet werden, wobei die Bereiche vorzugsweise in einen Nahbereich um das Messfahrzeug und einen Fernbereich aufgeteilt sind.

Hierbei wird bevorzugt eine auf pointRCNN, beschrieben in "PointRCNN: 3D Object Proposal Generation and Detection from Point Cloud" von Shaoshuai Shi et al., arXiv:1812.04244v2, 16.05.2019, basierende Architektur im Fernbereich eingesetzt. Diese ist zweckmäßigerweise besonders gut darin, sinnvolle Boxgrößen vorzuschlagen, und sie ist daher geeignet auch weit entfernte Objekte, die ggfs. nur aus wenigen Messpunkten bestehen, zu annotieren.

Im Nahbereich wird bevorzugt eine auf Center-Point, beschrieben in "Centerbased 3D Object Detection and Tracking" von Tianwei Yin et al., arXiv:2006.11275v1, 19.06.2020, basierte Architektur des neuronalen Netzes verwendet. Diese ist besser für die Unterscheidung zwischen verschiedene Objektklassen geeignet, und liefert daher im Nahbereich, in dem viele Messpunkte vorliegen, bessere Ergebnisse.

Gemäß alternativen Ausführungsformen der Erfindung können verschiedene Netzwerkarchitekturen für eine bessere Abdeckung kombiniert werden.

In einem zweiten Schritt S2 (Verwirf Duplikate) werden Duplikate entfernt, bei denen die verwendeten Objektdetektoren also mehrere Bounding Boxen um ein einzelnes Objekt in dem betrachteten Frame (Bild bzw. Punktwolke) erzeugt haben. Diese treten auf, da die neuronalen Netze in der Regel auf eine möglichst hohe Abdeckung optimiert, um keine Objekte zu übersehen - was allerdings zu vielen Duplikaten führt. Das Entfernen bzw. Verwerfen von Duplikation kann auf der Grundlage von Filterregeln erfolgen, die ein oder mehrere Kriterien umfassen können.

Ein Kriterium kann dabei den Überlapp, insbesondere die Intersection-over-Union, auch bekannt als Jaccard-Index, zwischen zwei Bounding Boxes betrachten. Wenn der Überlapp zweier Boxen über einem vorgegebenen Schwellwert liegt, insbesondere 0,98 für die Intersection-over-Union, liegt werden diese als Duplikate betrachtet. Der vorgegebene Schwellwert kann auch in Abhängigkeit von der erkannten Objektklasse gewählt werden. Auch kann als ein Kriterium vorgesehen sein, dass neben einem vorgegebenen Überlapp auch eine identische Objektklasse vorliegen muss, damit zwei Boxen als Duplikate betrachtet werden. Ferner kann die Konfidenz des für die Objekterkennung verwendeten Netzes als Kriterium für eine Filterregel herangezogen und/oder in einem kombinierten Kriterium mit der Objektklasse betrachtet werden. Daneben kann es vorgesehen sein, bei erkannten Duplikaten die Wahl der zu löschenden Box anhand der zugeordneten Konfidenz zu treffen, insbesondere die Box mit der geringeren Konfidenz zu löschen.

In einem dritten Schritt S3 (Korreliere Objekte zeitlich) werden die verbleibenden Objekte entlang ihrer Zeitachse betrachtet, um zeitliche Korrelationen festzustellen. Dies ist schematisch in Figur 5 angedeutet, welche 3 aufeinanderfolgende Frames zeigt, in denen ein Fahrzeug über die Frames durch Pfeile als identisch gekennzeichnet ist. Durch das Ermitteln von miteinander korrelierten Objekten können diese zu Ketten verknüpft werden, die dann später eine weitergehende Auswertung, aber auch das Schließen von Erkennungslücken auf einem dazwischenliegenden Frame ermöglichen.

Eine Korrelation der Objekte kann als eine Verknüpfung in unidirektionaler oder bidirektionaler Weise erfolgen. Erkennungslücken des ersten Durchgangs können basierend auf dieser Verknüpfung überbrückt werden, um Verdeckungen, Abschneidungen und verpasste Objekte zu überwinden.

In einer ersten Ausführungsform der Erfindung erfolgt eine unidirektionale Verknüpfung durch Schätzung der Position eines Objekts in einem nachfolgenden Bild. Wurde bei der Objekterkennung ein Objekt innerhalb des geschätzten Bereichs entdeckt, das bestimmte Plausibilitätsprüfungen erfüllt (Klassentyp, Ackermann-Modell für die Fahrzeugbewegung, ...), werden diese beiden Objektinstanzen als zu demselben Objekt gehörig markiert.

Als Strategie zur Schätzung der Position kann eine Gaußsche Prozessreduktion oder ein Kalman-Filter herangezogen werden. Die Gaußsche Prozessreduktion ist beschrieben in "Gaussian processes with builtin dimensionality reduction: Applications in high-dimensional uncertainty propagation", von Rohit Tripathy et al., arXiv:1602.04550v1, 15.02.2016. Kalman-Filter werden in der Statistik und Regelungstheorie verwendet und auch als linear-quadratische Schätzung bezeichnet. Der Algorithmus eines Kalman-Filters verwendet eine Reihe von Messungen, die im Laufe der Zeit beobachtet werden und statistisches Rauschen und andere Ungenauigkeiten enthalten, um eine Schätzungen unbekannter Variablen erzeugt, die in der Regel genauer sind als diejenigen, die auf einer einzigen Messung basieren. Weiterhin können Partikelfilter oder Sequentielle Monte-Carlo-Methoden (SMC) für die Positionsschätzung eingesetzt werden, also eine Reihe von Monte-Carlo-Algorithmen, die zur Lösung von Filterungsproblemen bei der Signalverarbeitung und der statistischen Schlussfolgerung nach Bayes verwendet werden. Je länger die Kette der bereits verknüpften Objekte ist, desto mehr Informationen können für eine hochpräzise Positionsschätzung herangezogen werden.

In einer zweiten Ausführungsform der Erfindung kann alternativ ein Factor Graph (ein bipartiter Graph, der die Faktorisierung einer Funktion darstellt) für die Objektverfolgung verwendet werden. Hierbei wird jedes Objekt auf einem Bild mit jedem Objekt auf einem nachfolgenden Bild verknüpft. Jede Verknüpfung wird nach bestimmten Kriterien gewichtet, und dann wird die perfekte Verknüpfung über beide Frames und über alle Objekte abgeleitet.

Gewichtungsregeln können anhand Heuristiken oder Verhaltensmodellen formuliert werden.

Sobald eine Korrelation der Objekte in aufeinanderfolgenden Frames erfolgt ist, können basierend auf dieser Verknüpfung zusätzliche semantische Informationen wie Trajektorien (also der Weg, den ein Massenpunkt in Bewegung durch den Raum als Funktion der Zeit zurücklegt), Geschwindigkeit (als Funktion über die Zeit), Ort, Verdeckung (Objekt zeitlich durch andere Objekte verdeckt) und Abschneidungen (an den Rändern der von den Sensoren erfassten Bereiche) sowie Informationen über Erkennungsfehler (Objekt existiert auf dem vorherigen und dem nachfolgenden Bild, daher könnte die Erkennung dazwischen fehlgeschlagen sein) abgeleitet und als Input für nachfolgende Automatisierungsschritte verwendet werden.

In einem vierten Schritt S4 (Entferne falsch positive Ergebnisse) werden irrtümlich erkannte Objekte entfernt. Für die Entfernung falsch-positiver Objekte können eine Vielzahl von Regeln bzw. Kriterien herangezogen und/oder kombiniert werden.

Beispielsweise kann die Höhe über dem Boden betrachtet werden, wobei Objekte, die teilweise unter der Erdoberfläche erkannt wurden, und/oder Objekte, die über dem Boden zu schweben scheinen, als unplausibel verworfen werden. Alternativ oder ergänzend kann für Fahrzeuge eine Betrachtung der Bewegung bzw. Trajektorie erfolgen, wobei eine oder mehrere Größen wie Beschleunigung oder Richtungsänderung ermittelt und mit vorgegebenen Grenzwerten verglichen werden können; eine Beschleunigung außerhalb des für einen bestimmten Fahrzeugtyps üblichen Bereichs oder außerhalb der physikalischen Möglichkeiten, die durch die Haftgrenzen der Reifen auf dem Boden begrenzt sind, ist unplausibel. Auch kann die Zeitspanne der Existenz betrachtet werden, wobei ein Objekt, dass nur innerhalb eines einzelnen Frames bzw. für wenige Sekundenbruchteile existiert, aber in den benachbarten Frames nicht auftaucht, unplausibel ist. Zweckmäßigerweise wird hierbei auch die mögliche Verdeckung durch andere Objekte berücksichtigt, um Fehler in der Ermittlung dieser Zeitspanne der Existenz zu vermeiden. Ergänzend kann es auch vorgesehen sein, dass nur solche Objekte als unplausibel verworfen werden, welche nur mit einer geringen Konfidenz vom neuronalen Netzwerk erkannt wurden.

Die Erkennung von falsch-positiven Ergebnissen hängt stark mit den semantischen Informationen zusammen, die aus der zeitlichen Korrelation abgeleitet werden. In der realen Welt würde ein Objekt zum Beispiel nicht nur für den Bruchteil einer Sekunde existieren. Durch das Verwerfen unplausibler Objekte können die in einem Annotationsprojekt vertraglich vereinbarten Präzisions- und Wiedererkennungswerte erreicht werden.

In einem fünften Schritt S5 (Optimiere Objektgrößen durch Regression) wird jedes Objekt über ein neuronales Netz auf seine perfekte Position und Größe regressiert. In einer Ausführungsform der Erfindung können bei der Regression der Boxgrößen auch benachbarte Bilder berücksichtigt werden. Alternativ oder ergänzend kann es - wie unten in Schritt S7 - auch vorgesehen sein, die Größen der Boxen eines identifizierten bzw. korrelierten Objekts in einem weiteren Postprocessing-Schritt aneinander anzugleichen.

In einem sechsten Schritt S6 (Schließe Lücken) werden, basierend auf dem zeitlichen Kontext, Lücken durch Interpolation geschlossen. Aus der Korrelation von Objekten in aufeinanderfolgenden Frames können zusätzliche semantische Informationen abgeleitet werden, um auch im Falle einer Verdeckung, wobei ein im Vordergrund befindliches Objekt zeitweise ein anderes verdeckt, und/oder von Clipping, wobei das Objekt aus dem von den Sensoren erfassten Bereichen hinausragt, oder von einem Erkennungsfehler, bei dem das Objekt auf dem vorherigen und dem nachfolgenden Bild existiert, weshalb die Erkennung dazwischen fehlgeschlagen sein, durchgehende Trajektorien für Verkehrsteilnehmer zu erhalten. Auch weitere semantische Informationen können aus der zeitlichen Korrelation abgeleitet und als Input für nachfolgende Automatisierungs- bzw. Postprocessing-Schritte verwendet werden. Figur 6 stellt schematisch eine Reihe von Frames dar, in denen ein korreliertes Objekt für die weitere Auswertung ausgewählt wurde.

In einem siebten Schritt S7 (Vereinheitliche Größe) werden die Größen über Ketten aufeinanderfolgender Bilder und/oder LIDAR-Punktwolken hinweg vereinheitlicht. Dies ist besonders wichtig, um realistische Größen zu erreichen, damit das Objekt besser aussieht und sich für den menschlichen Betrachter natürlicher anfühlt. Die Vereinheitlichung der Größe von korrelierten Objekten in aufeinanderfolgenden Bildern und/oder Punktwolken wird vorzugsweise in Abhängigkeit von der Objektklasse vorgenommen oder unterlassen. Insbesondere kann für Fahrzeuge eine Vereinheitlichung der Größe erfolgen, da Autos in der Regel ihre Größe über Frames hinweg beibehalten. Da Fußgänger je nach aktueller Körperhaltung eine unterschiedliche vermeintliche Größe aufweisen können, ist es vorteilhaft, wenn für die Objektklasse Fußgänger eine Vereinheitlichung der Größe unterlassen wird.

In einem achten Schritt S8 (Glätte Trajektorie anhand Physikmodell) werden die Trajektorien dynamischer Objekte bzw. Verkehrsteilnehmer in der Szene entsprechend den ihnen zugrunde liegenden physikalischen Modellen geglättet. Beispielsweise kann für die Beschreibung des Fahrverhaltens eines Kraftfahrzeugs das gebräuchliche Einspurmodell herangezogen werden.

In einem neunten Schritt S9 (Ermittle Attribute) wird eine Erkennung von Attributen durchgeführt. Dies kann verschiedene weitere Schritte umfassen.

Die relevanten Attribute können in Abhängigkeit von der für das aktuelle Projekt gültigen Label Spezifikation variieren, wobei verschiedene Objektklassen häufig unterschiedliche Attribute aufweisen. So weisen Kraftfahrzeuge beispielsweise Blinker zum Anzeigen einer geplanten Richtungsänderung und Bremslichter zum Anzeigen einer Bremsbetätigung auf. In dem neunten Durchlauf bzw. Schritt kann die Erkennung von Attributen bei Projekten vorzugsweise auf der Grundlage von Sensorfusion erfolgen. Bei Bedarf werden Werte für Blinker, Bremslichter, Notleuchten oder andere beschreibende Eigenschaften einer Anmerkung gesetzt. Um Objektinstanzen in 2D-Kameraaufnahmen mit Objektinstanzen desselben Objekts in 3D-LiDAR-Scans korrelieren zu können, müssen gemeinsame Informationen in beiden Datensätzen identifiziert werden. Diese gemeinsamen Datenpunkte werden dann verwendet, um beide Datensätze miteinander zu verschmelzen. Zur Erkennung von Attributen können verschiedene 2D-basierte Objekterkennungsnetzwerke auf den zusammengeführten Datensätzen ausgeführt werden; dabei kann insbesondere ein Attribut auf einem Kamerabild ermittelt und einem Objekt in der LIDAR-Punktwolke zugeordnet werden.

Die annotierten Sensordaten können für verschiedene Zwecke eingesetzt werden, wie beispielsweise die Extraktion von Fahrszenarien (Scenario Extraction), oder ein Trainieren von Perzeptionsnetzwerken, wofür annotierte bzw. angereicherte Daten als Ground Truth erforderlich sind (Data Enrichment). Je nach Automatisierungsziel können dabei sowohl die Reihenfolge als auch die individuelle Konfiguration der oben erläuterten Schritte angepasst werden, so dass einige der oben genannten Schritte optional sein können, also ausgeführt oder ausgelassen werden, und auch zusätzliche Schritte zur weiteren Anreicherung der Daten bei Bedarf hinzugefügt werden können.

Beispielsweise können für die Extraktion von Szenarien folgende Schritte ausgeführt werden:
1. Erkennung von Objekten (Schritt S1)
2. Verfolgung auf der Grundlage zeitlicher Korrelationen (Schritt S3)
3. Erkennung/Beseitigung falsch-positiver Ergebnisse (Schritt S4)
4. Regression (Schritt S5)
5. Größenvereinheitlichung (Schritt S7)
6. Glättung der Trajektorien (Schritt S8)

Beispielsweise könnten für die Selektion von Daten folgende Schritte ausgeführt werden:
1. die Erkennung von Objekten
2. die Verfolgung auf der Grundlage zeitlicher Korrelationen
3. falsch-positive Erkennung/Beseitigung

Beispielsweise können für die Datenanreicherung alternativ folgende Schritte ausgeführt werden:
1. Erkennung von Objekten (Schritt S1)
2. Verfolgung auf der Grundlage zeitlicher Korrelationen (Schritt S3)
3. Erkennung/Beseitigung falsch-positiver Ergebnisse (Schritt S4)
4. Regression von Position und Größe (vgl. Schritt S5)
5. Größenvereinheitlichung (Schritt S7)
6. Regression nur der Position (vgl. Schritt S5)
7. Erkennung von Attributen wie Blinkern, Bremslichtern und anderen beschreibenden Eigenschaften (Schritt S9)

Vorzugsweise sind die Algorithmen zur Durchführung der verschiedenen Schritte so aufgebaut, dass sie einer gemeinsamen Schnittstelle bzw. API genügen, um untereinander und in der Reihenfolge austauschbar zu sein, so dass sie auf verschiedene Weise kombiniert werden können, um verschiedene Zielergebnisse zu erreichen.

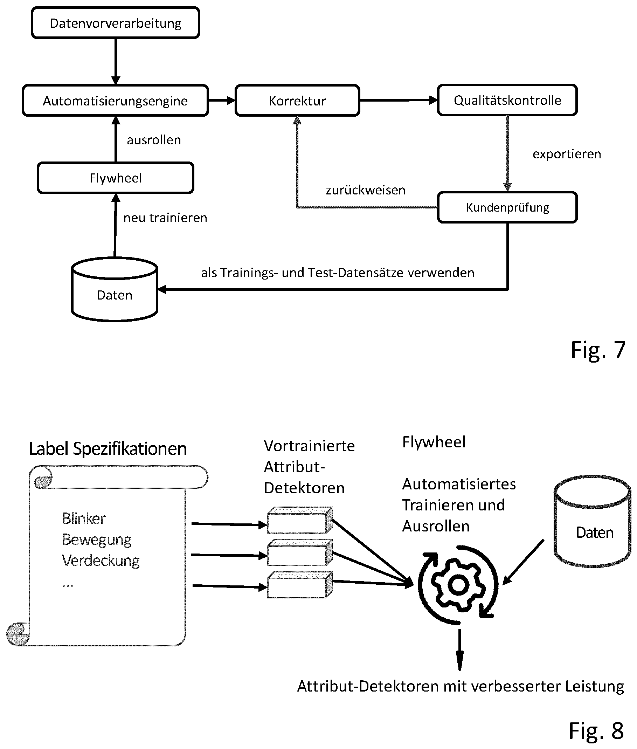

Figur 7 zeigt eine Ausführungsform eines Automatisierungssystems zur Durchführung eines erfindungsgemäßen Verfahrens. Das Automatisierungssystem implementiert verschiedene ergänzende Schritte in dedizierten Komponenten und ist gut für die Ausführung in einer Cloud-Computing-Umgebung geeignet.

In einem ersten Schritt, der Datenvorverarbeitung, werden Sensor-Rohdaten empfangen, die beispielsweise unsortiert sein können. Die Sensor-Rohdaten können Daten von Umfeldsensoren wie LIDAR-Punktwolken und/oder Bilder von einer oder mehreren Kameras sowie Daten eines GPS-Empfängers und/oder eines oder mehrerer Fahrzeugsensoren, wie Raddrehzahl-, Beschleunigungs- oder Gierratensensoren umfassen. Die Daten können normalisiert werden, z. B. in einzelne Frames aufgeteilt und/oder zu größeren Paketen zusammengefasst werden, um eine einheitliche Verarbeitung zu ermöglichen. Auch kann ein Zusammenfassen von gleichzeitig aufgenommenen Daten der verschiedenen Sensoren erfolgen.

In einem zweiten Schritt, der Automatisierungsengine, wird ein Paket von Frames von mindestens einer Automatisierungskomponente verarbeitet. Automatisierungskomponenten sind ein zentraler Bestandteil des Workflows eines Annotationssystems. Bei den Automatisierungskomponenten kann es sich insbesondere um neuronale Netze oder andere auf maschinellem Lernen basierende Technologien handeln, die aus Datensätzen auf überwachte, halbüberwachte oder nicht überwachte Weise lernen. Automatisierungskomponenten können einzelne Schritte oder Teilschritte eines erfindungsgemäßen Verfahrens implementieren. Bei einigen Schritten, wie beispielsweise der Erkennung von Attributen (S9) können mehrere Automatisierungskomponenten eingesetzt werden, wie verschiedene neuronale Netze zur Erkennung jeweils eines Attributs.

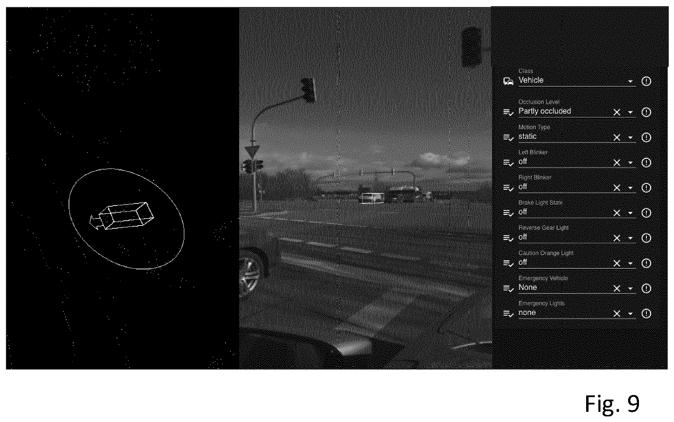

In einem dritten Schritt, der Qualitätskontrolle, wird vorzugsweise eine Stichprobe von Frames ausgewählt und durch einen Menschen überprüft. Hierbei kann dem menschlichen Qualitätsprüfer beispielsweise ein Kamerabild und/oder eine LIDAR-Punktwolke mit den entsprechenden Annotationen - wie beispielsweise einer Bounding Box - gezeigt werden, und er kann gefragt werden, ob die Bounding Box korrekt ist. Alternativ kann ihm eine Benutzeroberfläche zur Anpassung des Begrenzungsrahmens und/oder zum Hinzufügen eines Begrenzungsrahmens gezeigt werden, falls ein Objekt vom neuronalen Netz übersehen wurde. Das Automatisierungssystem empfängt die Eingaben des Qualitätsprüfers. Eine mögliche Ausführungsform einer Benutzeroberfläche ist in Fig. 9 dargestellt.

War die Qualitätsprüfung erfolgreich, können die annotierten Daten exportiert werden. In einem vierten Schritt, der Kundenprüfung, kann der Kunde eine Stichprobe der exportierten Frames prüfen, um sicherzustellen, dass die Annotationen seinen Spezifikationen und der gewünschten Annotationsqualität entsprechen. Weist der Kunde die Annotationen zurück, wird das Paket von annotierten Daten im Schritt Korrektur manuell überarbeitet.

In einem fünften Schritt, der Korrektur, erfolgt eine manuelle Annotierung des beanstandeten Pakets. Nach einer erneuten Qualitätskontrolle und erfolgreicher Kundenprüfung können die annotierten Frames als Trainings-/Validierungs- oder Testdatensätze verwendet werden. Diese Datensätze werden symbolisch durch einen Zylinder dargestellt und können zum neuen bzw. ergänzenden Training eingesetzt werden.

In deinem sechsten Schritt, dem "Flywheel", werden ein oder mehrere neuronale Netze bzw. Automatisierungskomponenten anhand der Trainingsdatensätze neu trainiert. Nach erfolgreichem Test mit dem entsprechenden Testdatensatz können die verbesserten neuronalen Netze ausgebracht bzw. in der Automatisierungsengine eingesetzt werden.

Figur 8 stellt eine beispielhafte Ausführungsform eines "Flywheel"-Verfahrens zum automatisierten Trainieren von Attributdetektoren dar.

Flywheel umfasst Techniken zur effizienten Speicherung von Trainingssätzen für jede Automatisierungskomponente, zur Überwachung von Änderungen der Trainingssätze und zur automatischen Auslösung von Neutrainings, sobald vordefinierte oder automatisch ermittelte Schwellenwerte für Änderungen der Trainingssätze erkannt werden. Darüber hinaus umfasst Flywheel Techniken, um neu trainierte Modelle automatisch in Automatisierungskomponenten auszurollen.

Welche Attribute erkannt werden müssen, ist in den Label Spezifikationen des jeweiligen Annotationsprojekts niedergelegt. Für ein Objekt der Klasse PKW sind beispielhaft der Status der Blinker, ein Bewegungszustand und eine eventuelle Verdeckung als Attribute genannt. Grundsätzlich können Objekte eine Vielzahl von für die jeweilige Objektklasse anzugebender Attribute aufweisen.

Vorzugsweise wird für die Attribute jeweils ein anhand eines bestehenden Datensatzes vortrainiertes neuronales Netz als Attribut-Detektor eingesetzt.

Mit dem Vorliegen geprüfter neuer Datensätze wird mindestens ein Attribut-Detektor neu trainiert, so dass die Attribut-Detektoren über den Verlauf des Annotationsprojekts eine verbesserte Leistung aufweisen und der manuelle Aufwand abnimmt.

Figur 9 zeigt eine Ausführungsform einer Benutzeroberfläche zur Qualitätskontrolle.

Auf der linken Seite ist ein Ausschnitt einer LIDAR-Punktwolke dargestellt, in dem eine Bounding Box mit ihrer Vorwärtsrichtung und einer Andeutung der Bodenebene (als Kreis) dargestellt ist. In der Mitte ist ein Ausschnitt eines gleichzeitig aufgenommenen Kamerabilds dargestellt, in dem ebenfalls die Bounding Box eingezeichnet ist. Rechts ist eine Auswahlliste dargestellt, in der verschiedene Attribute des von der Bounding Box umfassten Objekts ausgewählt bzw. eingegeben werden können. Beispielsweise handelt esd sich hier um ein Fahrzeug (Vehicle) welches steht (static), und bei dem kein Blinker gesetzt wurde (Left/Right Blinker off). Es kann auch vorgesehen sein, dass die Benutzeroberfläche einen (hier nicht dargestellten) Button umfasst, mit dem ein weiteres Fenster zur Angabe von Qualitätsproblemen geöffnet wird. Beispielsweise stimmt hier die Dimension der Bounding Box nicht, weil eine Ecke des Fahrzeugs sich außerhalb der Box befindet. Eine derartige Oberfläche vereinfacht die Qualitätskontrolle und verringert die dafür benötigte Zeit.

Ein erfindungsgemäßes Verfahren nutzt die zeitliche Korrelation zwischen aufeinanderfolgenden Frames, um plausible Objekterkennungen und stimmige Größen zu ermitteln und ermöglicht somit auch eine Annotierung großer Datenmengen.

## Patentansprüche

1. Computerimplementiertes Verfahren zur Annotation von Fahrszenario-Sensordaten, wobei das Verfahren umfasst:
Empfangen von Sensor-Rohdaten, wobei die Sensor-Rohdaten eine Mehrzahl von aufeinanderfolgenden Punktwolken eines LIDAR-Sensors und/oder eine Mehrzahl von aufeinanderfolgenden Bildern einer oder mehrerer Kameras umfassen,
Erkennen von Objekten in jedem Bild und/oder jeder Punktwolke unter Verwendung eines oder mehrerer neuronaler Netze,
Entfernen von Duplikaten vor einem Korrelieren von Objekten,
Korrelieren von Objekten innerhalb aufeinanderfolgender Bilder und/oder Punktwolken,
Entfernen von falsch positiven Ergebnissen, bei denen ein Objekt irrtümlich erkannt wurde, auf der Grundlage von Plausibilitätskriterien, wobei die Plausibilitätskriterien für das Entfernen von falsch positiven Ergebnissen auf der Höhe über dem Boden, der Existenzdauer und/oder dem Konfidenzniveau eines neuronalen Netzes basieren, und
Exportieren der annotierten Sensordaten des Fahrszenarios.

2. Verfahren nach Anspruch 1, wobei die Sensor-Rohdaten Punktwolken eines LIDAR-Sensors umfassen, wobei eine Punktwolke in mindestens zwei Regionen unterteilt wird, wobei zum Erkennen von Objekten in der ersten Region ein neuronales Netz einer ersten Architektur verwendet wird und in der zweiten Region ein neuronales Netz einer zweiten Architektur verwendet wird, wobei die erste Architektur sich von der zweiten Architektur unterscheidet.

3. Verfahren nach Anspruch 2, wobei die erste Region eine nähere Umgebung eines Messfahrzeugs umfasst, während die zweite Region einen Mindestabstand zum Messfahrzeug aufweist, wobei vorzugsweise in der ersten Region eine Center-Point-basierte Architektur und in der zweiten Region ein PointRCNN-basierte Architektur für das neuronale Netz zur Objekterkennung verwendet wird.

4. Verfahren nach einem der vorhergehenden Ansprüche,, wobei das Entfernen von Duplikaten auf einem Überlapp-Kriterium und/oder einem Konfidenzniveau eines neuronalen Netzes basiert.

5. Verfahren nach einem der vorhergehenden Ansprüche, wobei das Entfernen von Duplikaten erkannte Objekte innerhalb eines Bildes und/oder einer Punktwolke erfolgt, wobei für zwei überlappende Objekte, ein erstes Objekt, das mit einem ersten Konfidenzniveau erkannt wurde, und ein zweites Objekt, das mit einem zweiten Konfidenzniveau erkannt wurde, wobei das erste Konfidenzniveau größer ist als das zweite Konfidenzniveau, überprüft wird, ob der Überlapp, insbesondere die Intersection-over-Union, einen vorgegebenen Schwellenwert überschreitet, und wobei in diesem Fall das zweite Objekt als Duplikat verworfen wird.

6. Verfahren nach einem der vorhergehenden Ansprüche, wobei das Korrelieren von Objekten ein Verknüpfen von Objekten in aufeinanderfolgenden Frames, also Bildern und/oder Punktwolken umfasst, wobei ein Objekt in einem ersten Frame mit einem Objekt in einem zweiten Frame korreliert wird, wenn die Objekte zu derselben Objektklasse gehören und der Überlapp, insbesondere die Intersection-over-Union, einen vorgegebenen Schwellenwert überschreitet.

7. Verfahren nach einem der vorhergehenden Ansprüche, wobei das Korrelieren von Objekten ein Vorhersagen einer Position eines Objekts auf einem nachfolgenden Bild und/oder einer nachfolgenden Punktwolke mittels einer Gaußschen Prozessreduktion oder eines Kalman Filters umfasst und/oder ein Tracken von Objekten in aufeinanderfolgenden Bildern mittels eines Factor Graphs, also eines bipartiten Graphen zur Faktorisierung der Wahrscheinlichkeitsverteilung, erfolgt.

8. Verfahren nach Anspruch 6 oder 7, ferner umfassend das Korrigieren von verpassten Objekten, wobei mehr als zwei aufeinanderfolgende Frames betrachtet werden, wobei wenn ein Objekt in einem ersten Frame mit einem Objekt in einem dritten Frame korreliert wurde, aber kein Objekt im dazwischenliegenden Frame erkannt wurde, dann das Objekt im zweiten Frame eingefügt wird.

9. Verfahren nach einem der vorhergehenden Ansprüche, ferner umfassend ein Optimieren der Objektgröße und/oder Objektposition in jedem Bild der Kameradaten und/oder jeder Punktwolke durch Regression.

10. Verfahren nach einem der vorhergehenden Ansprüche, ferner umfassend eine Vereinheitlichung der Größe von korrelierten Objekten in aufeinanderfolgenden Bildern und/oder Punktwolken, wobei vorzugsweise die Vereinheitlichung der Größe von korrelierten Objekten in Abhängigkeit von der Objektklasse vorgenommen oder unterlassen wird.

11. Verfahren nach einem der vorhergehenden Ansprüche, wobei die Sensor-Rohdaten LIDAR-Punktwolken und simultan aufgenommene Kameradaten umfassen, wobei eine Korrelation von Objekten unter Berücksichtigung der relativen räumliche Ausrichtung von LIDAR-Sensor und Kamera erfolgt.

12. Verfahren nach einem der vorhergehenden Ansprüche, wobei auf ein erkanntes Objekt mindestens ein neuronales Netzwerk zur Erkennung von Attributen angewendet wird, vorzugsweise mindestens ein Attribut, insbesondere der Blinker-Status eines Fahrzeugs, anhand eines Kamerabilds ermittelt und einem Objekt in der LIDAR-Punktwolke zugeordnet wird.

13. Computerlesbarer Datenträger, der Anweisungen enthält, die, wenn sie von einem Prozessor eines Computersystems ausgeführt werden, das Computersystem veranlassen, ein Verfahren nach einem der vorhergehenden Ansprüche auszuführen.

14. Computersystem, umfassend einen Prozessor, eine Mensch-Maschine-Schnittstelle und einen nichtflüchtigen Speicher, wobei der nichtflüchtige Speicher Befehle enthält, die, wenn sie von dem Prozessor ausgeführt werden, das Computersystem veranlassen, ein Verfahren nach einem der vorangehenden Ansprüche auszuführen.

## Claims

1. Computer-implemented method for annotating driving scenario sensor data,
wherein the method comprises:
receiving raw sensor data, wherein the raw sensor data comprises a plurality of consecutive point clouds from a LIDAR sensor and/or a plurality of consecutive images from one or more cameras,
detecting objects in each image and/or point cloud using one or more neural networks,
removing duplicates prior to correlating objects,
correlating objects within successive images and/or point clouds,
removing false positives-where an object was erroneously detected-based on plausibility criteria, wherein the plausibility criteria for removing false positives are based on the height above ground, the lifetime and/or the confidence level of a neural network, and
exporting the annotated sensor data of the driving scenario.

2. Method according to claim 1, wherein the raw sensor data comprises point clouds from a LiDAR sensor, wherein a point cloud is divided into at least two regions, wherein a neural network of a first architecture is used to detect objects in the first region and a neural network of a second architecture is used in the second region, wherein the first architecture differs from the second architecture.

3. Method according to claim 2, wherein the first region comprises the immediate vicinity of a test vehicle, while the second region is located at a minimum distance from the test vehicle, wherein, preferably, a Center-Point-based architecture is used in the first region and a PointRCNN-based architecture is used in the second region for the neural network for object detection.

4. Method according to any of the preceding claims, wherein the removal of duplicates is based on an overlap criterion and/or a confidence level of a neural network.

5. Method according to any of the preceding claims, wherein the removal of duplicates is performed on detected objects within an image and/or a point cloud, wherein, for two overlapping objects-a first object detected with a first confidence level and a second object detected with a second confidence level, wherein the first confidence level is greater than the second confidence level, a check is performed to determine whether the overlap-specifically, the intersection-over-union-exceeds a predetermined threshold, and wherein, in this case, the second object is discarded as a duplicate.

6. Method according to any of the preceding claims, wherein the correlation of objects comprises linking objects in successive frames, i.e., images and/or point clouds, wherein an object in a first frame is correlated with an object in a second frame if the objects belong to the same object class and the overlap-specifically, the intersection-over-union-exceeds a predetermined threshold.

7. Method according to any of the preceding claims, wherein the correlation of objects comprises predicting the position of an object in a subsequent image and/or a subsequent point cloud using Gaussian process reduction or a Kalman filter, and/or tracking objects in successive images using a factor graph, i.e., a bipartite graph for factorizing the probability distribution.

8. Method according to claim 6 or 7, further comprising correcting for missed objects, wherein more than two consecutive frames are considered, such that if an object in a first frame was correlated with an object in a third frame but no object was detected in the intervening frame, then the object is inserted into the second frame.

9. Method according to any of the preceding claims, further comprising optimizing the object size and/or object position in each image of the camera data and/or each point cloud by regression.

10. Method according to any of the preceding claims, further comprising standardizing the size of correlated objects in consecutive images and/or point clouds, wherein the standardization of the size of correlated objects is preferably performed or omitted depending on the object class.

11. Method according to any of the preceding claims, wherein the raw sensor data comprises LIDAR point clouds and simultaneously acquired camera data, and wherein objects are correlated taking into account the relative spatial orientation of the LIDAR sensor and the camera.

12. Method according to any of the preceding claims, wherein at least one neural network is applied to a detected object to recognize attributes, preferably at least one attribute, in particular the turn signal status of a vehicle, is determined based on a camera image and is assigned to an object in the LIDAR point cloud.

13. Computer-readable medium containing instructions that, when executed by a processor of a computer system, cause the computer system to perform a method according to one of the preceding claims.

14. Computer system comprising a processor, a human-machine interface, and non-volatile memory, wherein the non-volatile memory contains instructions that, when executed by the processor, cause the computer system to perform a method according to one of the preceding claims.

## Revendications

1. Procédé mis en œuvre par ordinateur pour l'annotation de données de capteurs relatives à des scénarios de conduite,
le procédé comprenant :
la réception de données brutes de capteurs, lesdites données brutes de capteurs comprenant une pluralité de nuages de points successifs provenant d'un capteur LIDAR et/ou une pluralité d'images successives provenant d'une ou plusieurs caméras,
la détection d'objets dans chaque image et/ou chaque nuage de points à l'aide d'un ou plusieurs réseaux neuronaux,
la suppression des doublons avant la corrélation des objets,
la corrélation des objets au sein d'images et/ou de nuages de points successifs,
supprimer les faux positifs, c'est-à-dire les cas où un objet a été détecté par erreur, sur la base de critères de plausibilité, lesdits critères de plausibilité pour la suppression des faux positifs étant basés sur l'altitude au-dessus du sol, la durée d'existence et/ou le niveau de confiance d'un réseau neuronal, et
exportation des données de capteurs annotées du scénario de conduite.

2. Procédé selon la revendication 1, dans lequel les données brutes des capteurs comprennent des nuages de points provenant d'un capteur LIDAR, un nuage de points étant subdivisé en au moins deux régions, un réseau neuronal d'une première architecture étant utilisé pour la détection d'objets dans la première région et un réseau neuronal d'une deuxième architecture étant utilisé dans la deuxième région, la première architecture étant différente de la deuxième architecture.

3. Procédé selon la revendication 2, dans lequel la première région comprend l'environnement immédiat d'un véhicule de mesure, tandis que la deuxième région se trouve à une distance minimale du véhicule de mesure, dans lequel une architecture de type « Center-Point » est utilisé dans la première région et, dans la deuxième région, une architecture de type PointRCNN est utilisé pour le réseau neuronal de reconnaissance d'objets.

4. Procédé selon l'une des revendications précédentes, dans lequel la suppression des doublons repose sur un critère de chevauchement et/ou sur un niveau de confiance d'un réseau neuronal.

5. Procédé selon l'une des revendications précédentes, dans lequel la suppression des doublons porte sur des objets détectés au sein d'une image et/ou d'un nuage de points, dans lequel, pour deux objets qui se chevauchent, un premier objet détecté avec un premier niveau de confiance et un deuxième objet, détecté avec un deuxième niveau de confiance, le premier niveau de confiance étant supérieur au deuxième niveau de confiance, on vérifie si le chevauchement, en particulier le rapport « intersection sur union », dépasse une valeur seuil prédéfinie, et dans ce cas, le deuxième objet est rejeté en tant que doublon.

6. Procédé selon l'une des revendications précédentes, dans lequel la corrélation d'objets comprend une mise en correspondance d'objets dans des trames successives, c'est-à-dire des images et/ou des nuages de points, un objet d'une première trame étant corrélé avec un objet d'une deuxième trame lorsque les objets appartiennent à la même classe d'objets et que le chevauchement, en particulier l'intersection sur l'union, dépasse une valeur seuil prédéfinie.

7. Procédé selon l'une des revendications précédentes, dans lequel la corrélation d'objets comprend la prédiction d'une position d'un objet sur une image suivante et/ou un nuage de points suivant au moyen d'une réduction par processus gaussien ou d'un filtre de Kalman, et/ou un suivi d'objets dans des images successives au moyen d'un graphe de facteurs, c'est-à-dire d'un graphe biparti destiné à factoriser la distribution de probabilité.

8. Procédé selon la revendication 6 ou 7, comprenant en outre la correction des objets manqués, dans laquelle on prend en compte plus de deux trames consécutives, et dans laquelle, si un objet d'une première trame a été corrélé avec un objet d'une troisième trame, mais qu'aucun objet n'a été détecté dans la trame intermédiaire, l'objet est alors inséré dans la deuxième trame.

9. Procédé selon l'une des revendications précédentes, comprenant en outre l'optimisation de la taille et/ou de la position des objets dans chaque image des données de caméra et/ou chaque nuage de points par régression.

10. Procédé selon l'une des revendications précédentes, comprenant en outre une uniformisation de la taille des objets corrélés dans des images et/ou des nuages de points successifs, l'uniformisation de la taille des objets corrélés étant de préférence effectuée ou omise en fonction de la classe d'objets.

11. Procédé selon l'une des revendications précédentes, dans lequel les données brutes des capteurs comprennent des nuages de points LIDAR et des données de caméra enregistrées simultanément, une corrélation des objets étant effectuée en tenant compte de l'orientation spatiale relative du capteur LIDAR et de la caméra.

12. Procédé selon l'une des revendications précédentes, dans lequel au moins un réseau neuronal est appliqué à un objet détecté pour la reconnaissance d'attributs, de préférence au moins un attribut, notamment l'état des clignotants d'un véhicule, étant déterminé à partir d'une image de caméra et étant attribué à un objet dans le nuage de points LIDAR.

13. Support de données lisible par ordinateur, contenant des instructions qui, lorsqu'elles sont exécutées par un processeur d'un système informatique, amènent ce système à mettre en œuvre un procédé selon l'une des revendications précédentes.

14. Système informatique comprenant un processeur, une interface homme-machine et une mémoire non volatile, la mémoire non volatile contenant des instructions qui, lorsqu'elles sont exécutées par le processeur, amènent le système informatique à mettre en œuvre un procédé selon l'une des revendications précédentes.
